# EUROPEAN PATENT APPLICATION

(11) **EP 2 327 300 A2**
(43) Date of publication of application: **01.06.2011**
(21) Application number: 10251865.1
(22) Date of filing: 28.10.2010
(51) Int. Cl.: A01K 91/02, A01K 97/02

(54) **A bait boat for use in angling**

(30) Priority: 30.11.2009 GB 0921002
(71) Applicant: Fox International Group Limited, Hainault, Essex IG6 3UT (GB)
(72) Inventor: Little, Mark, Billericay Essex CM12 9QY (GB)
(74) Representative: Crouch, David John

(57) **Abstract**

A bait boat (10) for use in angling having a bait dispenser (30) which is openable to release bait by means of at least one pivotable flap (32) which drops from a bait retaining position to a bait releasing position to effect release of bait. A spring-loaded latch (50) is located to hold the flap (32) in its bait retaining position. The latch (50) is operable to allow the flap (32) to drop to its bait releasing position.

Also, a bait boat (10) for use in angling having a bait dispenser (30) which is openable to release bait by means of at least one pivotable flap (32) which drops from a bait retaining position to a bait releasing position to effect release of bait. At least portions of the flap (32) are located adjacent to other portions of the boat (10) when the flap (32) is in its bait releasing position. Those portions of the flap (32) and the said other portions are held together magnetically to hold the flap (32) against movement when the flap (32) is in its bait releasing position.

A bait boat (10) for use in angling having a twin-hulled construction (12, 14), a bait dispenser (30) located between upper parts of the hulls (12 and 14), propellers (24) at the stern of the body (10), and wall portions of each hull (12, 14) located inwardly of the associated propellers (24), such as to create barriers between the propellers (24) and the region between the hulls (12 and 14). This reduces the disturbance of released bait by the propellers (24) when the boat (10) is in use.

## Description

The present invention relates to a bait boat for use in angling, especially but not exclusively a radio-controlled bait boat that can be steered to a desired location on an expanse of water and then operated to release bait at that desired location.

Previous such bait boats have door release mechanisms whereby opening of the doors releases bait. They use electromagnets to overcome permanent magnets which normally hold the doors shut. This means it is necessary to use a high current from the batteries of the boat to open the doors.

The present invention seeks to provide a remedy.

The first aspect of the present invention is therefore directed to a bait boat for use in angling having a bait dispenser which is openable to release bait by means of at least one pivotable flap which drops from a bait retaining position to a bait releasing position to effect release of bait, in which a spring-loaded latch is located to hold the flap in its bait retaining position, the latch being operable to allow the flap to drop to its bait releasing position.

Preferably, an end face of the latch is slanted, whereby closure of the flap to its bait retaining position urges the latch against its spring-loading until the flap is urged beyond the latch, whereupon the latter returns to a position in which it holds the flap in its bait retaining position under the action of the spring-loading. This provides a particularly convenient construction for closing the flap.

Advantageously, the latch is provided with a protruding member engaged directly or indirectly by a servomotor. This provides an effective operation of the latch.

Preferably, the servomotor is radio-controlled. This provides an effective and tidy means to control the latch remotely.

An effective and balanced construction for the boat is achieved if the boat is provided with two such flaps. These may be provided with respective such latches. A simple construction can be effected having a single servomotor to operate both latches.

A disadvantage of previous constructions of bait boat has been encountered in that once the flaps or release doors have been opened, they are able to swing freely without control and this may hamper the manoeuvrability of the boat when the user attempts to bring it back to the water's edge.

The second aspect of the present invention seeks to provide a remedy.

Accordingly, the second aspect of the present invention is directed to a bait boat for use in angling having a bait dispenser which is openable to release bait by means of at least one pivotable flap which drops from a bait retaining position to a bait releasing position to effect release of bait, in which at least portions of the flap are located adjacent to other portions of the boat when the flap is in its bait releasing position, those portions of the flap and the said other portions being held together magnetically to hold the flap against movement when the flap is in its bait releasing position.

Advantageously, the flap is provided with at least one portion of magnetic material, and the said other portions of the boat are provided with at least one magnet which attracts the said at least one portion of the flap when the latter is in its bait releasing position.

To avoid unnecessary circuitry, it is preferable for the said at least one magnet to be a permanent magnet.

In one convenient construction of bait boat, the latter comprises a twin hull construction, the flap is located between the two hulls, and the magnet is located on the inside of one of the hulls.

In one balanced and convenient construction, two such flaps are provided which drop away from one another to effect release of bait.

In an earlier construction of twin-hulled bait boat, respective propellers are provided at the stern ends of the boat projecting rearwardly from the rear ends of the hulls. This has the effect of disturbing bait released from the boat.

A third aspect of the present invention seeks to provide a remedy to this problem.

Accordingly, the third aspect of the present invention is directed to a bait boat for use in angling having a twin-hulled construction, a bait dispenser located between upper parts of the hulls, propellers at the stern of the body, and wall portions of each hull located inwardly of the associated propellers, such as to create barriers between the propellers and the region between the hulls, thereby to reduce the disturbance of released bait by the propellers when the boat is in use.

Desirably both hulls are streamlined at both their bows and their sterns, so that the boat may be relatively easily controlled in both the forward and rearward direction.

Advantageously, the propellers are protected by respective cages which act as weed guards.

Preferably, each propeller is covered by a plate. This reduces the extent to which bubbles are directed upwardly to improve the stealth of the boat and it also improves the efficiency of the propellers.

An example of a bait boat embodying all three aspects of the present invention will now be described in greater detail with reference to the accompanying drawings, in which:
Figure 1 shows an underneath plan view of a bait
   boat embodying the present invention;
Figure 2 shows an underside of part of the boat shown in Figure 1 with portions thereof removed to reveal other parts of the boat;
Figure 3 shows a perspective rear view of the body shown in Figure 1 from one side;
Figure 4 shows a perspective rear view of the body shown in Figures 1 and 3 from underneath and from the rear releasing bait;
Figure 5 shows a perspective view from the front and slightly to one side of the bait boat shown in Figures 1 and 3;
Figure 6 shows in greater detail a part of the boat shown in Figures 1 to 5; and
Figure 7 shows a perspective front view from one side of a latch mechanism of the boat shown in Figures 1 to 5.

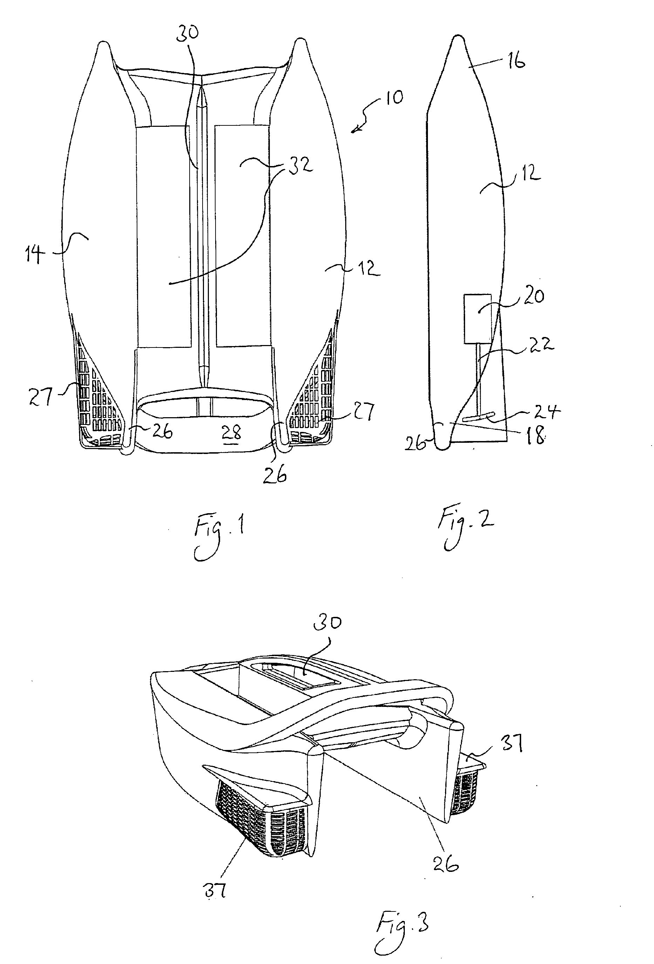

A bait boat 10 shown in Figures 1 to 5 is made of injection moulded plastics components for ease of construction. It has a twin-hulled construction being made with two elongate parallel hulls 12 and 14, both of which are streamlined fore and aft. Thus, both hulls have a pointy bow end 16 and a pointy stern end 18. The stern and bow profile of each hull substantially mirror one another. The hulls 12 and 14 are provided with respective drive motors 20 connected via prop shafts 22 to rotate propellers 24. Each hull 12 or 14 is provided with a rear wall portion 26 located inwardly of the associated propeller 24, so that each wall portion 26 provides a barrier between the associated propeller 24 and the region 28 between the hulls 12 and 14.

The boat can be steered by operating the propellers 24 at different respective speeds. If they are operated in opposite senses, the boat itself may be rotated rapidly.

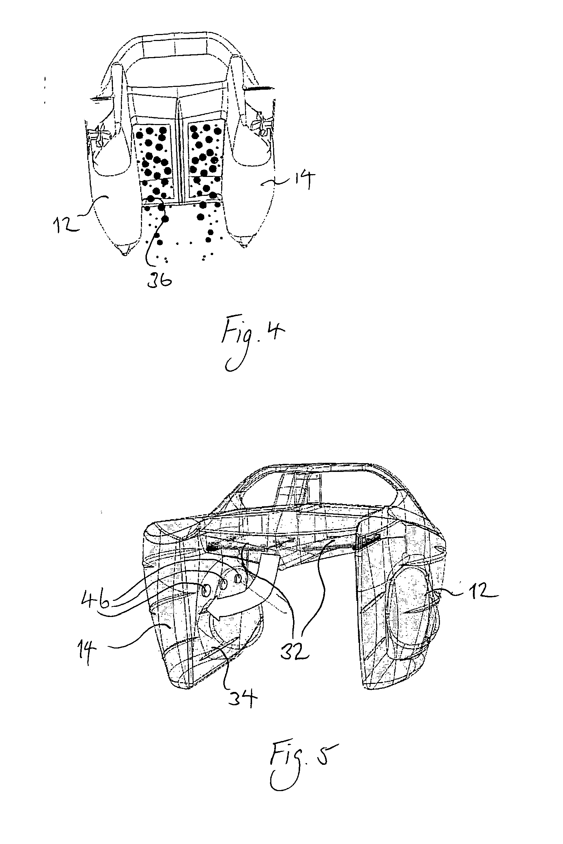

A bait dispenser 30 spans the upper portions of the hulls 12 and 14 and is provided on its underside with two elongate generally parallel bait release doors or flaps 32 which are pivoted to the underside of the dispenser 30 with pivot axes extending along and parallel to the hulls 12 and 14. These flaps 32 are in their generally horizontal bait retaining positions in Figures 1 and 5, but, when opened, drop away from one another as they pivot about their respective pivot axes to bait releasing positions, when operated for bait release, to lie flat against a generally vertical adjacent hull wall 34. The movement of the left flap shown in Figure 5 in this way is shown by a curved arrow in that Figure. Bait 36 is then released by gravity from the dispenser as shown in Figure 4. The bait drops down between the hulls, and the wall portions 26 of the hulls 12 and 14 inhibit interference between the propellers 24 and the bait 36, both for forward and reverse directions of travel of the boat, and also it inhibits interference of operation of the flaps 32 by the propellers 24.

The propellers 24 are protected by respective cages 27 which act as weed guards, and are covered by respective plates 37.

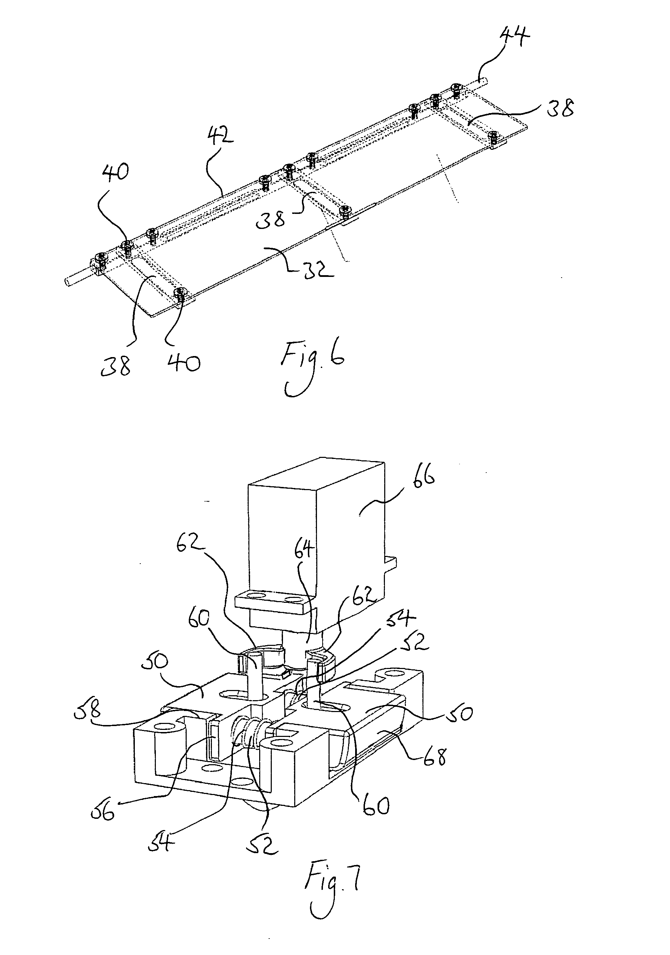

The doors 32 each have a construction as shown in Figure 6 (the two doors being mirror images of one another). Each is reinforced by three metal brackets 38 which extend across the width of the door and are secured to the door 32 by means of screws 30. An outer edge of each door 32 is provided with a generally tubular portion 42 through which extends a pivot rod 44, the latter being secured at its respective ends to the associated hull 12 or 14.

Permanent magnets 46 are provided on the inside wall 34 of each hull 12 or 14 and are located such that when the flap 32 drops to its bait releasing position, the brackets 38 are in registration with the magnets 46 and are held in position against those magnets magnetically.

The flaps 32 are held in their generally horizontal bait retaining positions by means of latches 50 shown in Figure 7. These latches 50 are located in the middle of the bait dispenser in such a fashion that the inner edges of the flaps 32 rest on outside regions of the upper surfaces of the latches 50. The latches are restrained to linear inward and outward movements by means of spigots 52, and are urged outwardly away from one another by helical springs 54 which surround the spigots 52. Their outward movement away from one another is limited by abutments 56 and 58.

Respective projecting portions 60 extend upwardly from the latches 50. These portions 60 are engaged by respective arms 62 projecting laterally from the rotary shaft 64 of a radio-controlled servomotor 66. When the shaft 64 is rotated clockwise by about or substantially half a turn, it moves the right-hand latch 50 towards the left hand latch to release the associated flap 32. Rotation of the shaft 64 by about or substantially half a turn in the other direction releases the other flap 32.

This construction is readily sealed against ingress of water into the motor 66 by means of an 0-ring around the motor shaft 64.

The outer end of each latch comprises a slanting outer surface 68 so that the flap 32 may be returned to its bait retaining position manually by rotating it upwardly against the latch so that its engagement with the slanting surface 68 urges the latch 50 inwardly until the flap 32 is clear of the slanting surface 68 whereupon the latch 50 is sprung back outwardly under the action of the helical springs 64 to retain the flap 32 in its bait retaining position.

Numerous variations and modifications to the illustrated bait boat may occur to the reader without taking the resulting construction outside the scope of the present invention. For example, it would be possible to locate a single latch at respective ends of the flaps 32 to retain both flaps and, when operated, to release both flaps simultaneously. The hulls may be made more cheaply if they are vacuum moulded rather than injection moulded.

## Claims

1. A bait boat (10) for use in angling having a bait dispenser (30) which is openable to release bait by means of at least one pivotable flap (32) which drops from a bait retaining position to a bait releasing position to effect release of bait, **characterised in that** a spring-loaded latch (50) is located to hold the flap (32) in its bait retaining position, the latch (50) being operable to allow the flap (32) to drop to its bait releasing position.

2. A bait boat according to claim 1, **characterised in that** an end face (68) of the latch (50) is slanted, whereby closure of the flap (32) to its bait retaining position urges the latch (50) against its spring-loading until the flap (32) is urged beyond the latch (50), whereupon the latter returns to a position in which it holds the flap (32) in its bait retaining position under the action of the spring-loading.

3. A bait boat according to claim 1 or claim 2, **characterised in that** the latch (50) is provided with a protruding member (60) engaged directly or indirectly by a servomotor (66).

4. A bait boat according to claim 4, **characterised in that** the servomotor (66) is radio-controlled.

5. A bait boat according to any preceding claim, **characterised in that** the boat (10) is provided with two such flaps (32).

6. A bait boat according to claim 5, **characterised in that** the two flaps (32) are provided with respective such latches (50).

7. A bait boat according to claim 6, **characterised in that** the bait boat has a single servomotor (66) which serves to operate both latches (50).

8. A bait boat (10) for use in angling having a bait dispenser (30) which is openable to release bait by means of at least one pivotable flap (32) which drops from a bait retaining position to a bait releasing position to effect release of bait, **characterised in that** at least portions of the flap (32) are located adjacent to other portions of the boat (10) when the flap (32) is in its bait releasing position, those portions of the flap (32) and the said other portions being held together magnetically to hold the flap (32) against movement when the flap (32) is in its bait releasing position.

9. A bait boat according to claim 8, **characterised in that** the flap (32) is provided with at least one portion of magnetic material, and the said other portions of the boat (10) are provided with at least one magnet (46) which attracts the said at least one portion of the flap (32) when the latter is in its bait releasing position.

10. A bait boat according to claim 9, **characterised in that** the said at least one magnet (46) is a permanent magnet.

11. A bait boat according to claim 9 or claim 10, **characterised in that** the bait boat (10) comprises a twin hull construction (12, 14), the flap (32) is located between the two hulls (12 and 14), and the magnet (46) is located on the inside of one of the hulls (12 or 14).

12. A bait boat according to claim 11, **characterised in that** two such flaps (32) are provided which drop away from one another to effect release of bait.

13. A bait boat (10) for use in angling having a twin-hulled construction (12, 14), a bait dispenser (30) located between upper parts of the hulls (12 and 14), propellers (24) at the stern of the body (10), and wall portions of each hull (12, 14) located inwardly of the associated propellers (24), such as to create barriers between the propellers (24) and the region between the hulls (12 and 14), thereby to reduce the disturbance of released bait by the propellers (24) when the boat (10) is in use.

14. A bait boat according to claim 13, **characterised in that** both hulls (12 and 14) are streamlined at both their bows and their sterns, so that the boat (10) may be relatively easily controlled in both the forward and rearward direction.

15. A bait boat according to claim 13 or claim 14, **characterised in that** the propellers (24) are protected by respective cages (27) which act as weed guards.

16. A bait boat according to any one of claims 13 to 15, **characterised in that** each propeller (24) is covered by a plate (37).
